(19) Europäisches Patentamt
European Patent Office
Office européen des brevets

(11) **EP 2 713 612 A2**

(12) **EUROPEAN PATENT APPLICATION**
published in accordance with Art. 153(4) EPC

(43) Date of publication:
**02.04.2014 Bulletin 2014/14**

(21) Application number: **12804333.8**

(22) Date of filing: **28.06.2012**

(51) Int Cl.:
***H04N 7/26*** (0000.00)

(86) International application number:
**PCT/KR2012/005149**

(87) International publication number:
**WO 2013/002587 (03.01.2013 Gazette 2013/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2011 US 201161501956 P**

(71) Applicant: **Samsung Electronics Co., Ltd.**
**Suwon-si, Gyeonggi-do 443-742 (KR)**

(72) Inventors:
• **LEE, Tammy**
**Seoul 137-070 (KR)**

• **CHEN, Jianle**
**Suwon-si**
**Gyeonggi-do 443-725 (KR)**

(74) Representative: **Davies, Robert Ean**
**Appleyard Lees**
**15 Clare Road**
**Halifax**
**Yorkshire HX1 2HY (GB)**

(54) **METHOD AND APPARATUS FOR IMAGE ENCODING AND DECODING USING ADAPTIVE QUANTIZATION PARAMETER DIFFERENTIAL**

(57)    A method of encoding an image, a method of decoding an image, an image encoding apparatus, and an image decoding apparatus, the method of encoding an image including the operations of determining a scaling factor, determining a quantization parameter (QP) value of a current block, acquiring a predicted QP value of the current block, determining a QP difference value by using the QP value and the predicted QP value, adjusting the QP difference value by extracting the scaling factor from the QP difference value, generating a bitstream including the scaling factor and the adjusted QP difference value, and transmitting the bitstream.

FIG. 6

EP 2 713 612 A2

## Description

### TECHNICAL FIELD

The present invention relates to encoding and decoding of an image, and more particularly, to encoding and decoding of an image performed using a quantization parameter (QP) difference value that is adjusted using a scaling factor.

### BACKGROUND ART

Recently, the ISO/IEC Moving Picture Experts Group (MPEG) and the ITU-T Video Coding Experts Group (VCEG) have established a Joint Collaborative Team for Video Coding (JCT-VC) to develop a next-generation High Efficiency Video Coding (HEVC) video compression standard. HEVC aims to improve coding efficiency by up to 50% compared to H.264/Advanced Video Coding (AVC), which provided the highest compression ratio in the past. HEVC adopts a different coding structure from H.264/AVC and is designed to efficiently encode not only small-sized images but also large-sized images. Predictive coding and transform coding involve a hierarchical quadtree structure, and, in particular, transform coding involves a hierarchical transform structure by extending transform blocks from small-sized transform blocks to $32 \times 32$ transform blocks.

HEVC uses a basic coding technique, a prediction technique, and a transformation/quantization technique with hierarchical variable block sizes. Such a variable block may be indicated by a coding unit (CU) which is a basic block of HEVC, a CU may have a variable size, and a texture within a CU may represent different characteristics according to size.

When image information is transmitted in real time, a bit amount may change significantly over time according to the characteristics and type of an image, because the change of the bit amount is very restrictive in terms of characteristics of a channel used in transmission and has a fixed bandwidth. Accordingly, adjustment of encoding parameters is necessary to provide optimum encoding performance by adjusting a balance between the quality of an image and a channel capacity. The encoding performance may be adjusted only through a process of determining a suitable quantization parameter (QP) for each frame before encoding image information. Therefore, a bit rate control method in a video codec needs to select an optimal QP before mode determination and motion vector determination are performed.

### DETAILED DESCRIPTION OF THE INVENTION

### TECHNICAL SOLUTION

The present invention provides a method of encoding an image, a method of decoding an image, an image encoding apparatus, and an image decoding apparatus.

According to an aspect of the present invention, there is provided a method of encoding an image, the method comprising determining a scaling factor, determining a quantization parameter (QP) value of a current block, acquiring a predicted QP value of the current block, determining a QP difference value by using the QP value and the predicted QP value, adjusting the QP difference value by extracting the scaling factor from the QP difference value, generating a bitstream including the scaling factor and the adjusted QP difference value, and transmitting the bitstream.

According to an embodiment, the scaling factor may be a predetermined value determined in units of at least one of a slice, a picture, and a sequence.

According to an embodiment, the scaling factor may be determined by at least one of characteristic information of the image, a size of a block, and a bit rate.

According to an embodiment, the scaling factor may be included in at least one of a slice header, a picture header, and a sequence header of the bitstream.

According to an embodiment, an adjusted QP difference value for each block of the image may be included in the bitstream.

According to another aspect of the present invention, there is provided a method of decoding an image, the method comprising extracting a scaling factor and an adjusted QP difference value from a received bitstream, estimating a predicted QP value of a current block, acquiring a QP value of the current block by using the predicted QP value, the scaling factor, and the adjusted QP difference value, and performing inverse quantization on the current block by using the acquired QP value.

According to an embodiment, the scaling factor may be a predetermined value determined in units of at least one of a slice, a picture, and a sequence.

According to an embodiment, the scaling factor may be determined by at least one of characteristic information of the image, a size of a block, and a bit rate.

According to an embodiment, the scaling factor may be included in at least one of a slice header, a picture header, and a sequence header of the bitstream.

According to an embodiment, an adjusted QP difference value for each block of the image may be included in the bitstream.

According to another aspect of the present invention, there is provided an apparatus for encoding an image, the apparatus comprising a scaling factor determiner which determines a scaling factor associated with an image, a QP determiner which determines a QP value of a current block, a predicted QP acquirer which acquires a predicted QP value of the current block, a QP difference determiner which determines a QP difference value by using the QP value and the predicted QP value, an adjuster which adjusts the QP difference value by extracting the scaling factor from the QP difference value, a bitstream generator which generates a bitstream including the scaling factor and the adjusted QP difference value, and a transmitter which transmits the bitstream.

According to an embodiment, the scaling factor may be a predetermined value determined in units of at least one of a slice, a picture, and a sequence.

According to an embodiment, the scaling factor may be determined by at least one of characteristic information of the image, a size of a block, and a bit rate.

According to an embodiment, the scaling factor may be included in at least one of a slice header, a picture header, and a sequence header of the bitstream.

According to an embodiment, an adjusted QP difference value for each block of the image may be included in the bitstream.

According to another aspect of the present invention, there is provided an apparatus for decoding an image, the apparatus comprising a difference information extractor which extracts a scaling factor and an adjusted QP difference value from a received bitstream, a predicted QP estimator which estimates a predicted QP value of a current block, a QP acquirer which acquires a QP value of the current block by using the predicted QP value, the scaling factor, and the adjusted QP difference value, and an inverse quantizer which performs inverse quantization on the current block by using the acquired QP value.

According to an embodiment, the scaling factor may be a predetermined value determined in units of at least one of a slice, a picture, and a sequence.

According to an embodiment, the scaling factor may be included in at least one of a slice header, a picture header, and a sequence header of the bitstream.

According to an embodiment, an adjusted QP difference value for each block of the image may be included in the bitstream.

According to another aspect of the present invention, there is provided a computer-readable recording medium having recorded thereon a program for executing the method of encoding an image.

According to another aspect of the present invention, there is provided a computer-readable recording medium having recorded thereon a program for executing the method of decoding an image.

BRIEF DESCRIPTION OF THE DRAWINGS

FIG. 1 is a block diagram of an image encoding apparatus according to an embodiment of the present invention;
FIG. 2 is a block diagram of an image decoding apparatus according to an embodiment of the present invention;
FIGS. 3A and 3B illustrate an example in which a scaling factor is applied to a quantization parameter difference, according to an embodiment of the present invention;
FIG. 4 is a block diagram of a general image encoding apparatus based on coding units;
FIG. 5 is a block diagram of a general image decoding apparatus based on coding units;
FIG. 6 is a flowchart of an image encoding method according to an embodiment of the present invention;
FIG. 7 illustrates a structure of a video sequence according to an embodiment of the present invention;
FIG. 8 is a flowchart of an image decoding method according to an embodiment of the present invention;
FIG. 9 is a block diagram of an image encoding apparatus according to an embodiment of the present invention; and
FIG. 10 is a block diagram of an image decoding apparatus according to an embodiment of the present invention.

MODE OF THE INVENTION

Terminology used herein will now be briefly described, and the present invention will be described in detail.

Although general terms being widely used at present were selected as terminology used in the present invention while considering the functions of the present invention, they may vary according to intentions of those of ordinary skill in the art, judicial precedents, the advent of new technologies, and the like. Terms arbitrarily selected by the applicant

EP 2 713 612 A2

of the present invention may also be used in a specific case. In this case, their meanings need to be given in the detailed description of the present invention. Hence, the terms must be defined based on the meanings of the terms and the contents of the entire specification, not by simply stating the terms themselves.

It will be understood that the terms "comprises" and/or "comprising," or "includes" and/or "including" when used in this specification, specify the presence of stated elements, but do not preclude the presence or addition of one or more other elements. Terms such as "... unit" and "module" stated in the specification denote units that process at least one function or operation, and they may be implemented by using hardware, software, or a combination of hardware and software.

The present invention will now be described more fully with reference to the accompanying drawings, in which exemplary embodiments of the invention are shown. The invention may, however, be embodied in many different forms and should not be construed as being limited to the embodiments set forth herein. In the drawings, parts irrelevant to the description are omitted for simplicity of explanation, and like numbers refer to like elements throughout. Expressions such as "at least one of," when preceding a list of elements, modify the entire list of elements and do not modify the individual elements of the list.

Most existing video codecs use a scalar quantizer. Basic quantization may be usually performed according to Equation 1 below:

【Equation 1】

$$Z_{ij} = round(Y_{ij}/Qstep)$$

Dequantization may be performed according to Equation 2 below:

【Equation 2】

$$Y_{ij} = Z_{ij}*Qstep$$

where $Y_{ij}$ denotes a transformation coefficient, Qstep denotes a quantization step size, and $Z_{ij}$ denotes a quantized coefficient.

This process in a video codec may avoid division and/or floating point arithmetic, and implementation thereof may become complicated when combining a not-yet-scaled matrix with a scaled matrix in order to normalize transformation. Dequantization in a video codec may be performed according to Equation 3 below:

【Equation 3】

$$Y_{ij} = (Z_{ij} * QPScale_{ij}( QP \% 6) << (QP/6)) >> qbits$$

52 quantization step sizes Qstep usually used in a video codec may be indexed by a quantization parameter (QP). The values of the quantization step sizes Qstep respectively corresponding to the quantization parameters QP may be schematically expressed using Equation 4 below:

【Equation 4】

$$Qstep \approx 2^{\frac{QP-4}{6}}$$

where QP may be in the range of 0, 1, 2, through to 51. According to Equation 4, the quantization step size Qstep increases approximately 12.25% with an increment in the quantization parameter QP. In other words, every time QP increments by 1, Qstep increases about 12.25% compared to a previous Qstep. When QP increments by 6, Qstep is doubled. In other words, every time QP increments by 6, Qstep is doubled compared to a previous Qstep.

In a video codec, the quantization parameter QP is changeable, a QP difference, namely, delta QP, may be encoded in units of data units (for example, predetermined blocks) having quantization coefficients other than 0 and be transmitted to a decoding apparatus. The quantization parameter difference may include a difference between a QP value of a current block and a predicted QP value of the current block.

In decoding, a QP of a current block, QP_curr, may be determined by Equation 5 below:

【Equation 5】

$$QP\_curr = QP\_pred + dQP$$

where QP_curr denotes a QP value of a current block. In Equation 5, QP_pred may be a QP value of a block previous to the current block or may be generated according to an arbitrary prediction method. In Equation 5, dQP includes a difference between the QP value of the current block QP_curr and the QP value of the previous block QP_pred. When a quantized coefficient other than 0 exists in the current block, dQP denotes the difference between the QP value of the current block QP_curr and the QP value of the previous block QP_pred. In other words, if there is no a quantized coefficient of non-zero exists in the current block, the value dQP may be set to be zero.

QP_slice denotes a QP of each slice, and encoded QP_slice may be included in the header of a current slice and be transmitted and received, and may be used as a QP value QP_pred of a first block included in the current slice.

It is difficult to effectively apply a conventional QP scaling technique to various compression scenarios because smooth control of an increment in a quantization step size is difficult, when considering a compression quality or a bit rate of an image.

A mapping relationship between the quantization step size Qstep and the quantization parameter QP may be generally expressed as in Equation 6 below:

【Equation 6】

$$Qstep \approx 2^{\frac{QP-\alpha}{\beta}}$$

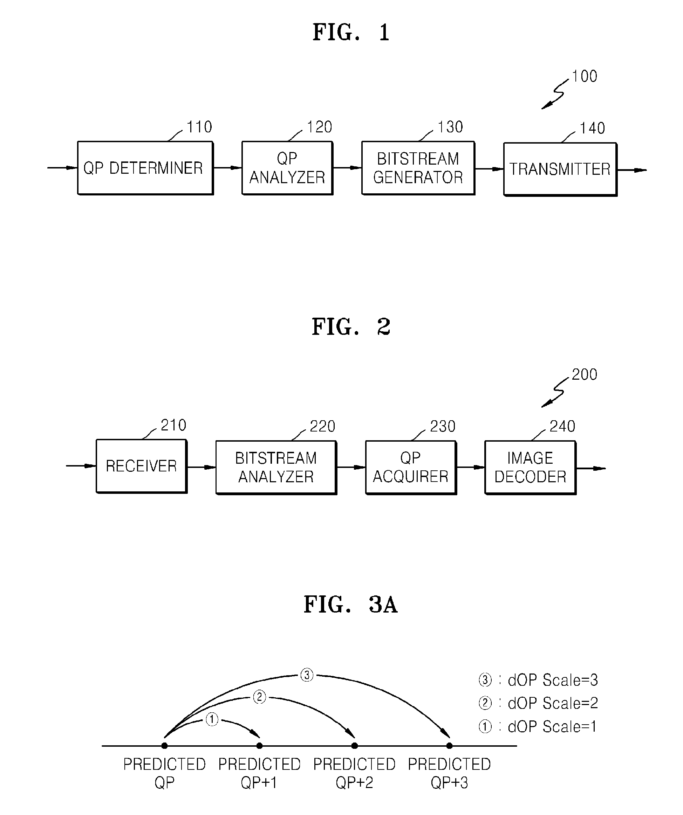

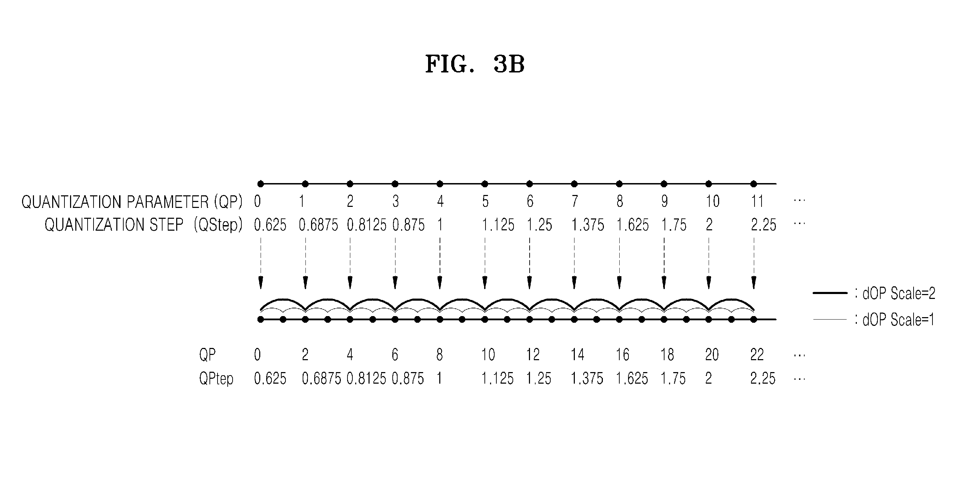

As illustrated in Equation 6, when $\beta$ is set to be a large value, granularity of the quantization step size Qstep may increase. The increase in the granularity of the quantization step size Qstep denotes a reduction in an increasing rate of the quantization step size Qstep with respect to an increment of QP. This will be described in detail later with reference to FIGS. 3A and 3B.

FIG. 1 is a block diagram of an image encoding apparatus 100 according to an embodiment of the present invention.

Referring to FIG. 1, the image encoding apparatus 100 may include a QP determiner 110, a QP analyzer 120, a bitstream generator 130, and a transmitter 140.

The QP determiner 110 may determine a scaling factor associated with an image, determine a QP value of a current block, acquire a predicted QP value of the current block, and determine a QP difference value of the current block by using the QP value and the predicted QP value.

The QP analyzer 120 may adjust the QP difference value by using the scaling factor.

The bitstream generator 130 may generate a bitstream including the scaling factor and the adjusted QP difference value.

The transmitter 140 may transmit the bitstream between elements of the image encoding apparatus 100 or transmit the bitstream to an image decoding apparatus.

FIG. 2 is a block diagram of an image decoding apparatus 200 according to an embodiment of the present invention.

Referring to FIG. 2, the image decoding apparatus 200 may include a receiver 210, a bitstream analyzer 220, a QP acquirer 230, and an image decoder 240.

The receiver 210 may receive a bitstream including a scaling factor and an adjusted QP difference value.

The bitstream analyzer 220 may extract the scaling factor and the adjusted QP difference value from the received bitstream.

The QP acquirer 230 may predict a QP value of a current block to generate a predicted QP value, and acquire the QP value of the current block by using the predicted QP value, the extracted scaling factor, and the adjusted QP difference value.

The image decoder 240 may perform inverse quantization by using the acquired QP value of the current block. Also, the image decoder 240 may restore an image by inverse transformation.

As described above, adjustment of encoding parameters is required to provide highest encoding performance by adjusting a balance between the quality of an image and a channel capacity. For example, a parameter acquired during encoding (for example, a QP difference dQP) may be adjusted using a scaling factor, and a bitstream necessary for transmission may be efficiently constructed if the adjusted parameter can be transmitted. For example, when the QP difference dQP determined during encoding is 8 and the scaling factor is 2, an adjusted QP difference dQP becomes 4 and thus is half of the QP difference dQ of 8, which has not yet been scaled and used in decoding, and thus, a bitstream may be constructed of less bits.

On the other hand, when the scaling factor is 4, an adjusted QP difference dQP becomes 2 and thus is a quarter of the QP difference do of 8, which has not yet been scaled and used in decoding, and thus a bitstream may be constructed of less bits.

FIGS. 3A and 3B illustrate an example in which a scaling factor is applied to a QP difference, according to an embodiment of the present invention.

For example, referring to Equation 7 below for acquiring a QP of a current block during decoding, different QPs of the current block QP_curr may be acquired from a predicted QP according to a scaling factor (for example, dQP_scale).

【Equation 7】

$$QP\_curr = QP\_pred + dQP * dQP\_Scale$$

As illustrated in FIG. 3A, when dQP=1, different QPs of the current block may be acquired according to the scaling factor (for example, dQP_scale). In other words, when the scaling factor is 1, 'predicted QP + 1' is acquired as the QP value of the current block as indicated by ①. When the scaling factor is 2, 'predicted QP + 2' is acquired as the QP value of the current block as indicated by ②. When the scaling factor is 3, 'predicted QP + 3' is acquired as the QP value of the current block as indicated by ③.

In other words, an increasing rate from the predicted QP value to the QP value of the current block may vary according to the scaling factor with respect to the same QP difference value.

FIG. 3B illustrates mapping of a quantization step size Qstep with a QP value of a general video codec and mapping of a quantization step size Qstep with a QP value in the case where the range of the QP value is doubled. Referring to FIG. 3B, due to the double increase of the range of the QP value, the quantization step size Qstep may increase about 5.95% every time the QP value increments by 1. For example, in the case of mapping of a quantization step size Qstep with a QP value of a general video codec, when the QP value increases from 3 to 4, the quantization step size Qstep increases from 0.875 to 1, that is, about 12.25%. On the other hand, when the range of the QP value is doubled (i.e., in the mapping illustrated in a lower part of FIG. 3B ), an increase in the quantization step size Qstep according to an increment of the QP value by 1 is smaller than that in the mapping illustrated in an upper part of FIG. 3B. In other words, in the mapping illustrated in the lower part of FIG. 3B, when the QP value is 6, the quantization step size Qstep is 0.875, and the quantization step size Qstep is not increased to 1 until the QP value increases by 2.

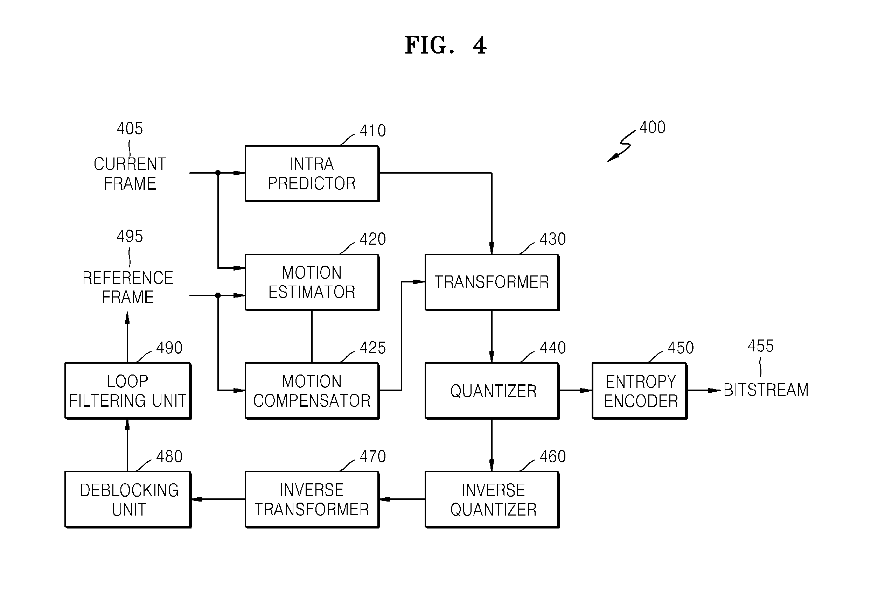

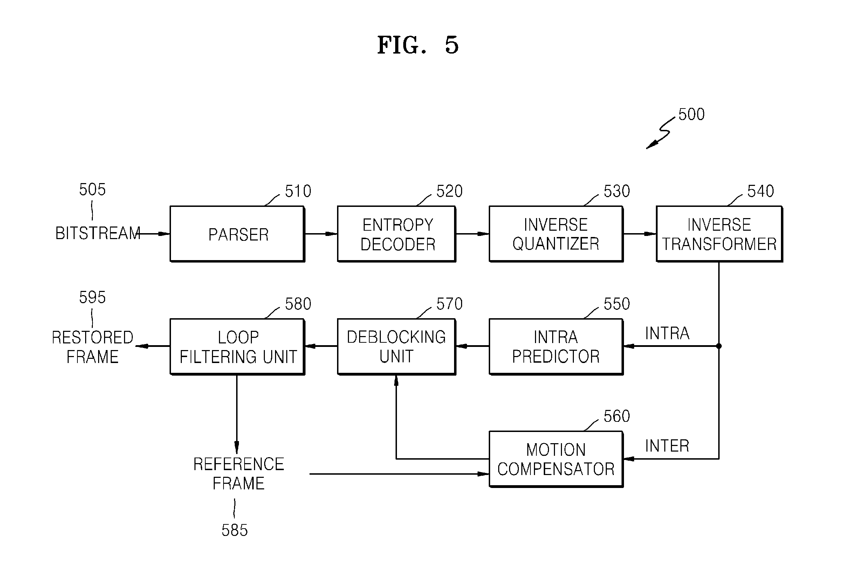

General encoding and decoding of an image will now be summarized with reference to FIGS. 4 and 5 before a detailed description of embodiments of the present invention is given.

FIG. 4 is a block diagram of a general image encoding apparatus 400 based on coding units.

Operations performed after an operation of a transformer 430 may be applied to the image encoding apparatus 100 according to an embodiment of the present invention. However, acquisition of a QP value in encoding may be performed in a manner similar to operations which are executed to encode an image. An intra predictor 410 included in the general image encoding apparatus 400 performs intra prediction on coding units in an intra mode, from among a current frame 405, and a motion estimator 420 and a motion compensator 425 included therein perform motion estimation and motion compensation, respectively, by using the current frame 405 and a reference frame 495.

Similarly, a QP difference dQP may be acquired as a difference between a QP of a current block and a predicted QP of the current block by estimating the predicted QP of the current block. In other words, the predicted QP may be a QP value of a block previous to the current block or may be generated according to an arbitrary prediction method. For example, the predicted QP of the current block may be estimated by referring to the block previous to the current block. For example, the QP value of the block previous to the current block may be used as the predicted QP of the current block.

Referring back to FIG. 4, data output from the intra predictor 410, the motion estimator 420, and the motion compensator 425 is output as a quantized transformation coefficient through the frequency transformer 430 and a quantizer 440. The quantized transformation coefficient is restored as data in a spatial domain through an inverse quantizer 460 and an inverse transformer 470. The restored data in the spatial domain is output as the reference frame 495 after being post-processed through a deblocking unit 480 and a loop filtering unit 490. The quantized transformation coefficient may be output as a bitstream 455 through an entropy encoder 450.

As all of the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490 may perform operations based on each coding unit from among coding units having a tree structure while considering the maximum depth of each maximum coding unit, the acquisition of the QP may be performed based on each coding unit. A block according to an embodiment of the present invention may be a quadtree-based coding unit which is an encoding data unit in which an image is encoded at an encoder side.

FIG. 5 is a block diagram of a general image decoding apparatus 500 based on coding units.

Referring to FIG. 5, a parser 510 parses encoded image data to be decoded and information about encoding necessary for decoding from a bitstream 505. The encoded image data is output as inverse quantized data through an entropy decoder 520 and an inverse quantizer 530, and image data in a spatial domain is restored from the inverse quantized data through an inverse transformer 540.

An intra predictor 550 performs intra prediction on coding units in an intra mode with respect to the image data in the spatial domain, and a motion compensator 560 performs motion compensation on coding units in an inter mode by using a reference frame 585. The image data in the spatial domain, which passed through the intra predictor 550 and the motion compensator 560, may be output as a restored frame 595 after being post-processed through a deblocking unit 570 and a loop filtering unit 580. Also, the image data post-processed through the deblocking unit 570 and the loop filtering unit 580 may be output as the reference frame 585.

Operations performed after the parser 510 may be applied to the image decoding apparatus 200 according to an embodiment of the present invention.

Similar to the image encoding apparatus 100 according to an embodiment of the present invention, all of the parser 510, the entropy decoder 520, the inverse quantizer 530, the inverse transformer 540, the intra predictor 550, the motion compensator 560, the deblocking unit 570, and the loop filtering unit 580 perform operations based on coding units having a tree structure for each maximum coding unit.

Specifically, the intra prediction 550 and the motion compensator 560 need to determine partitions and a prediction mode for each of the coding units having a tree structure, and the inverse transformer 540 needs to determine a size of a transformation unit for each coding unit.

For example, a block for use in decoding according to an embodiment of the present invention may be a quadtree-based decoding unit which is a data unit in which an image is decoded at a decoder side.

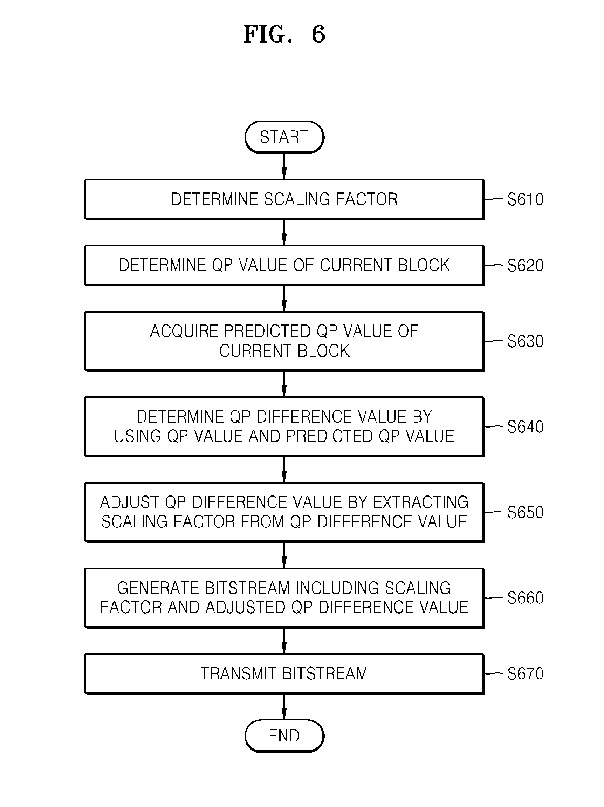

FIG. 6 is a flowchart of an image encoding method according to an embodiment of the present invention.

Referring to FIG. 6, the image encoding method may include an operation S610 of determining a scaling factor, an operation S620 of determining a QP value of a current block, an operation S630 of acquiring a predicted QP value of the current block, an operation S640 of determining a QP difference value by using the QP value and the predicted QP value, an operation S650 of adjusting the QP difference value by extracting the scaling factor from the QP difference value, an operation S660 of generating a bitstream including the scaling factor and the adjusted QP difference value, and an operation S670 of transmitting the bitstream.

A scaling factor according to an embodiment of the present invention may be a predetermined value determined in units of at least one of a slice, a picture, and a sequence. For example, the scaling factor may be a positive integer such as 1, 2, or 3. For example, the scaling factor may include an arbitrary real number value.

The scaling factor according to an embodiment of the present invention may be determined by at least one of image characteristic information, a size of a block, and a bit rate. For example, when an image rapidly changes between frames, the scaling factor may be set to be a relatively large value. When the size of a block is large, the scaling factor may be set to be a relatively small value. For example, the scaling factor may be set to be 1, which is the minimum value of a positive integer. When a bit rate changes significantly, the scaling factor may be set to be a relatively large value, because the QP value needs to be greatly changed in order to quickly adapt to changes occurring in encoding and also to reduce overhead generated when coding a QP difference value dQP.

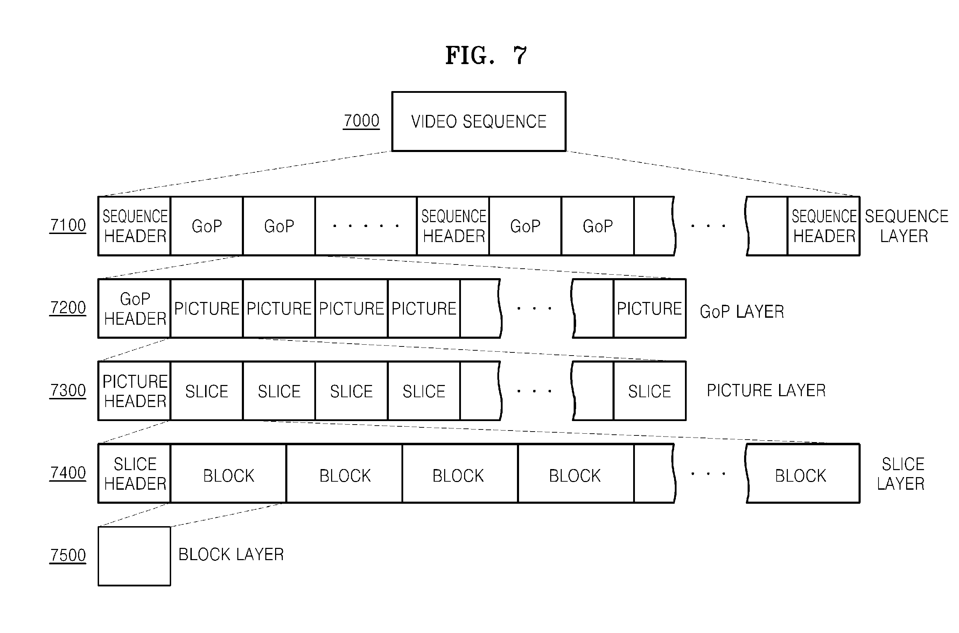

A scaling factor according to an embodiment of the present invention may be determined in units of at least one of a slice, a picture, and a sequence. A scaling factor determined in units of slices may be applied to blocks included in a slice layer. This will now be described in greater detail with reference to FIG. 7.

FIG. 7 illustrates a structure of a video sequence 7000 including an image, according to an embodiment of the present invention.

Referring to FIG. 7, the video sequence 7000 may be divided into a sequence layer 7100, a group of pictures (GoP) layer 7200, a picture layer 7300, a slice layer 7400, and a block layer 7500.

The sequence layer 7100 may include at least one sequence header and sets of GoPs, the GoP layer 7200 may include at least one GoP header and a plurality of pictures, and the picture layer 7300 may include a picture header and a plurality of slices. The slice layer 7400 may include a slice header and a plurality of blocks each corresponding to the block layer 7500.

As described above, a scaling factor according to an embodiment of the present invention may be included in at least one of a slice header, a picture header, and a sequence header of a bitstream. An adjusted QP difference value for each block of an image may also be included in a bitstream. In other words, a QP difference dQP acquired during encoding may be expressed as a scaling factor and an adjusted difference value, the scaling factor may be included in a slice header or the like, and an adjusted QP difference dQP of each block may be included in a part other than the header of a bitstream. Due to the inclusion of the scaling factor in a slice header or the like, a compromise between overhead of bits for the QP difference dQP and good rate/quality allocation may be smoothly adjusted.

For example, when QP differences dQP for 4 blocks included in a slice are 4, 8, and 10 and a scaling factor is set to be 2, a slice header of a bitstream may include the scaling factor of 2. When the scaling factor of 2 is used, the QP differences dQP of 4, 8, and 10 may be adjusted to be 2, 4, and 5, and thus QP differences dQP to be used during decoding may be reduced compared to the QP differences dQP of 4, 8, and 10, which have not yet been adjusted. In this way, a scaling factor set for a single slice may be applied to each of at least one block included in the slice. In other words, by applying a scaling factor included in a slice header of a slice to all of the blocks included in the slice, a QP difference dQP for the blocks included in the slice is reduced, whereby data of fewer bits may be transmitted and received between an image encoding apparatus and an image decoding apparatus.

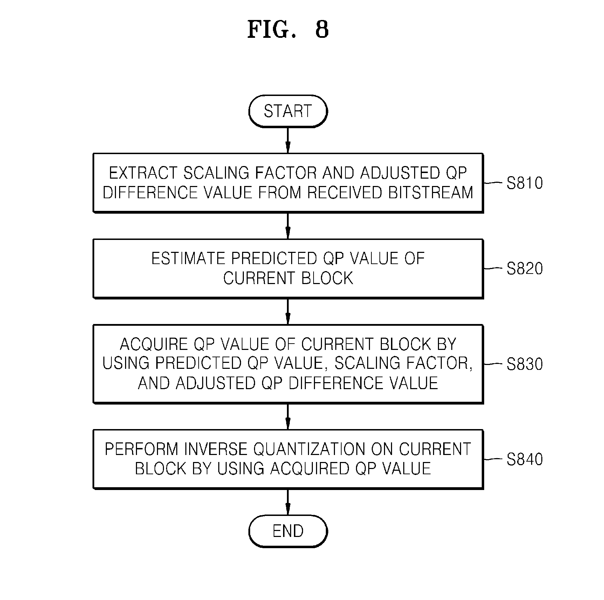

FIG. 8 is a flowchart of an image decoding method according to an embodiment of the present invention.

Referring to FIG. 8, the image decoding method may include an operation S810 of extracting a scaling factor and an adjusted QP difference value from a received bitstream, an operation S820 of estimating a predicted QP value of a current block, an operation S830 of acquiring a QP value of the current block by using the predicted QP value, the scaling factor, and the adjusted QP difference value, and an operation S840 of performing inverse quantization on the current block by using the acquired QP value.

A scaling factor according to an embodiment of the present invention may be a predetermined value determined in units of at least one of a slice, a picture, and a sequence. For example, the scaling factor may be a positive integer such as 1, 2, or 3. For example, the scaling factor may include an arbitrary real number value.

The scaling factor according to an embodiment of the present invention may be determined by at least one of image characteristic information, a size of a block, and a bit rate. As described above in relation to encoding, when the size of a block is large, the scaling factor may be set to be a relatively small value. For example, the scaling factor may be set to be 1, which is the minimum value of a positive integer. For example, when an image rapidly changes between frames or a bit rate changes significantly, the scaling factor may be set to be a relatively large value, because the QP value needs to be greatly changed in order to quickly adapt to changes occurring in encoding and also to reduce overhead generated when coding a QP difference value dQP.

As described above, the scaling factor according to an embodiment of the present invention may be included in at least one of a slice header, a picture header, and a sequence header of a bitstream, and an adjusted QP difference value of each block of an image may be included in the bitstream.

For example, a scaling factor determined in units of slices and received by being included in the header of a slice may be applied to each of blocks included in the slice.

For example, when a scaling factor of 2 is received by being included in the header of a slice including 4 blocks and 2, 4, and 5 are received as QP differences dQP between blocks, the QP differences dQP of 2, 4, and 5 may be scaled to 4, 8, and 10 to serve as QP differences dQP for use in decoding. In other words, even when 2, 4, and 5 are received through a bitstream as the QP differences dQP, 4, 8, and 10 may be actually used to decode the current block.

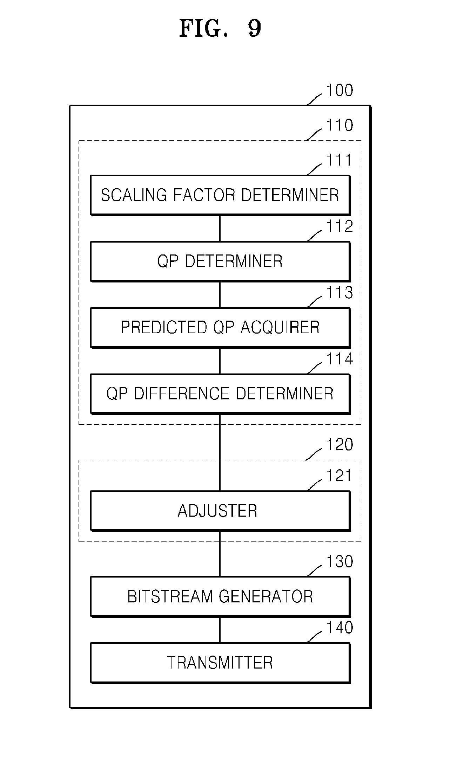

FIG. 9 is a block diagram of an image encoding apparatus 100 according to an embodiment of the present invention.

Referring to FIG. 9, the image encoding apparatus 100 may include a scaling factor determiner 111 for determining a scaling factor associated with an image, a QP determiner 112 for determining a QP value of a current block, a predicted QP acquirer 113 for acquiring a predicted QP value of the current block, a QP difference determiner 114 for determining a QP difference value by using the QP value and the predicted QP value, an adjuster 121 for adjusting the QP difference value by extracting the scaling factor from the QP difference value, the bitstream generator 130 for generating a bitstream including the scaling factor and the adjusted QP difference value, and the transmitter 140 for transmitting the bitstream.

Referring to FIGS. 1 and 9, the QP determiner 110 of the image encoding apparatus 100 may include the scaling factor determiner 111, the QP determiner 112, the predicted QP acquirer 113, and the QP difference determiner 114. The QP analyzer 120 of the image encoding apparatus 100 may include the adjuster 121.

A scaling factor according to an embodiment of the present invention may be a predetermined value determined in units of at least one of a slice, a picture, and a sequence. For example, the scaling factor may be a positive integer such as 1, 2, or 3. For example, the scaling factor may include an arbitrary real number value.

The scaling factor according to an embodiment of the present invention may be determined according to at least one of image characteristic information, a size of a block, and a bit rate.

For example, when an image rapidly changes between frames, the scaling factor may be set to be a relatively large value. When the size of a block is large, the scaling factor may be set to be a relatively small value. For example, the scaling factor may be set to be 1, which is the minimum value of a positive integer. When a bit rate changes significantly, the scaling factor may be set to be a relatively large value, because the QP value needs to be greatly changed in order to quickly adapt to changes occurring in encoding and also to reduce overhead generated when coding a QP difference value dQP.

In other words, a scaling factor determined in units of slices may be applied to blocks included in a slice layer.

As described above, the scaling factor according to an embodiment of the present invention may be included in at least one of a slice header, a picture header, and a sequence header of a bitstream, and an adjusted QP difference value of each block of an image may be included in the bitstream.

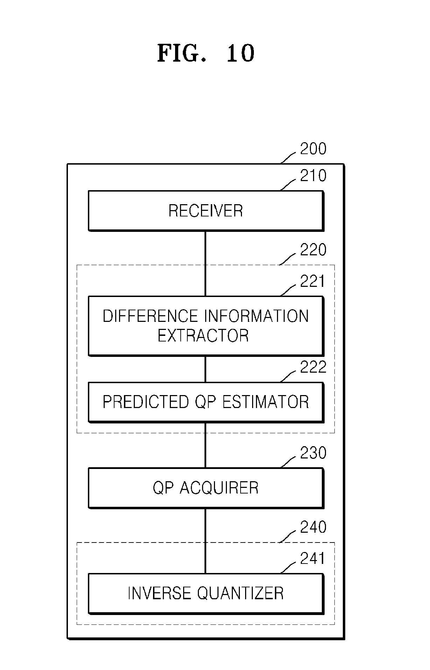

FIG. 10 is a block diagram of an image encoding apparatus 200 according to an embodiment of the present invention.

Referring to FIG. 10, the image decoding apparatus 200 may include the receiver 210 for receiving a bitstream, a difference information extractor 221 for extracting a scaling factor and an adjusted QP difference value from the bitstream, a predicted QP estimator 222 for estimating a predicted QP value of a current block, the QP acquirer 230 for acquiring a QP value of the current block by using the predicted QP value, the scaling factor, and the adjusted QP difference value, and an inverse quantizer 241 for performing inverse quantization on the current block by using the acquired QP value.

Referring to FIGS. 2 and 10, the bitstream analyzer 220 of the image decoding apparatus 200 may include the difference information extractor 221 and the predicted QP predictor 222. The image decoder 240 of the image decoding apparatus 200 may include the inverse quantizer 241.

A scaling factor according to an embodiment of the present invention may be a predetermined value determined in units of at least one of a slice, a picture, and a sequence. For example, the scaling factor may be a positive integer such as 1, 2, or 3. For example, the scaling factor may include an arbitrary real number value.

As described above, the scaling factor according to an embodiment of the present invention may be included in at least one of a slice header, a picture header, and a sequence header of a bitstream, and an adjusted QP difference value of each block of an image may be included in the bitstream.

The descriptions of the above-described method of FIG. 6 may be equally applied to the apparatus 100 of FIG. 9 according to an embodiment of the present invention. Also, the descriptions of the above-described method of FIG. 8 may be equally applied to the apparatus 200 of FIG. 10 according to an embodiment of the present invention. Accordingly, descriptions of the above-described methods of FIGS. 6 and 8 related to the apparatuses 100 and 200 of FIGS. 9 and 10 will not be repeated here.

The above-described embodiments of the present invention may be written as computer programs and may be implemented in general-use digital computers that execute the programs using a computer readable recording medium.

Examples of the computer readable recording medium include magnetic storage media (e.g., ROM, floppy disks, hard disks, etc.), optical recording media (e.g., CD-ROMs, or DVDs), etc.

Up to now, the present invention has been described by referring to exemplary embodiments. While the exemplary embodiments have been particularly shown and described, it will be understood by those of ordinary skill in the art that various changes in form and details may be made therein without departing from the spirit and scope of the present invention as defined by the appended claims. Therefore, the exemplary embodiments should be considered in a descriptive sense only and not for purposes of limitation. Therefore, the scope of the present invention is defined not by the detailed description of the exemplary embodiments, but by the appended claims, and all differences within the scope will be construed as being included in the present invention.

**Claims**

1. A method of encoding an image, the method comprising:

    determining a scaling factor;
    determining a quantization parameter (QP) value of a current block;

acquiring a predicted QP value of the current block;
determining a QP difference value by using the QP value and the predicted QP value;
adjusting the QP difference value by extracting the scaling factor from the QP difference value;
generating a bitstream including the scaling factor and the adjusted QP difference value; and
transmitting the bitstream.

2. The method of claim 1, wherein the scaling factor is a predetermined value determined in units of at least one of a slice, a picture, and a sequence.

3. The method of claim 1, wherein the scaling factor is determined by at least one of characteristic information of the image, a size of a block, and a bit rate.

4. The method of claim 1, wherein
the scaling factor is included in at least one of a slice header, a picture header, and a sequence header of the bitstream, and
an adjusted QP difference value for each block of the image is included in the bitstream.

5. A method of decoding an image, the method comprising:

extracting a scaling factor and an adjusted QP difference value from a received bitstream;
estimating a predicted QP value of a current block;
acquiring a QP value of the current block by using the predicted QP value, the scaling factor, and the adjusted QP difference value; and
performing inverse quantization on the current block by using the acquired QP value.

6. The method of claim 5, wherein the scaling factor is a predetermined value determined in units of at least one of a slice, a picture, and a sequence.

7. The method of claim 5, wherein the scaling factor is determined by at least one of characteristic information of the image, a size of a block, and a bit rate.

8. The method of claim 5, wherein
the scaling factor is included in at least one of a slice header, a picture header, and a sequence header of the bitstream, and
an adjusted QP difference value for each block of the image is included in the bitstream.

9. An apparatus for encoding an image, the apparatus comprising:

a scaling factor determiner which determines a scaling factor associated with an image;
a QP determiner which determines a QP value of a current block;
a predicted QP acquirer which acquires a predicted QP value of the current block;
a QP difference determiner which determines a QP difference value by using the QP value and the predicted QP value;
an adjuster which adjusts the QP difference value by extracting the scaling factor from the QP difference value;
a bitstream generator which generates a bitstream including the scaling factor and the adjusted QP difference value; and
a transmitter which transmits the bitstream.

10. The apparatus of claim 9, wherein the scaling factor is a predetermined value determined in units of at least one of a slice, a picture, and a sequence.

11. The apparatus of claim 9, wherein the scaling factor is determined by at least one of characteristic information of the image, a size of a block, and a bit rate.

12. The apparatus of claim 9, wherein
the scaling factor is included in at least one of a slice header, a picture header, and a sequence header of the bitstream, and
an adjusted QP difference value for each block of the image is included in the bitstream.

**13.** An apparatus for decoding an image, the apparatus comprising:

a difference information extractor which extracts a scaling factor and an adjusted QP difference value from a received bitstream;
a predicted QP estimator which estimates a predicted QP value of a current block;
a QP acquirer which acquires a QP value of the current block by using the predicted QP value, the scaling factor, and the adjusted QP difference value; and
an inverse quantizer which performs inverse quantization on the current block by using the acquired QP value.

**14.** The apparatus of claim 13, wherein the scaling factor is a predetermined value determined in units of at least one of a slice, a picture, and a sequence.

**15.** The apparatus of claim 13, wherein
the scaling factor is included in at least one of a slice header, a picture header, and a sequence header of the bitstream, and
an adjusted QP difference value for each block of the image is included in the bitstream.

# FIG. 1

```
            110              120              130              140
    ┌─────────────┐  ┌─────────────┐  ┌─────────────┐  ┌─────────────┐
──→ │ QP DETERMINER│─→│     QP      │─→│  BITSTREAM  │─→│ TRANSMITTER │──→
    │             │  │  ANALYZER   │  │  GENERATOR  │  │             │
    └─────────────┘  └─────────────┘  └─────────────┘  └─────────────┘
```

100

# FIG. 2

```
         210                220              230              240
    ┌───────────┐  ┌─────────────┐  ┌───────────┐  ┌───────────┐
──→ │ RECEIVER  │─→│  BITSTREAM  │─→│    QP     │─→│   IMAGE   │──→
    │           │  │  ANALYZER   │  │ ACQUIRER  │  │  DECODER  │
    └───────────┘  └─────────────┘  └───────────┘  └───────────┘
```

200

# FIG. 3A

③ : dOP Scale=3
② : dOP Scale=2
① : dOP Scale=1

PREDICTED QP    PREDICTED QP+1    PREDICTED QP+2    PREDICTED QP+3

FIG. 3B

| QUANTIZATION PARAMETER (QP) | 0 | 1 | 2 | 3 | 4 | 5 | 6 | 7 | 8 | 9 | 10 | 11 | ⋯ |
| QUANTIZATION STEP (QStep) | 0.625 | 0.6875 | 0.8125 | 0.875 | 1 | 1.125 | 1.25 | 1.375 | 1.625 | 1.75 | 2 | 2.25 | ⋯ |

─── : dOP Scale=2
─── : dOP Scale=1

| QP | 0 | 2 | 4 | 6 | 8 | 10 | 12 | 14 | 16 | 18 | 20 | 22 | ⋯ |
| QPtep | 0.625 | 0.6875 | 0.8125 | 0.875 | 1 | 1.125 | 1.25 | 1.375 | 1.625 | 1.75 | 2 | 2.25 | ⋯ |

**FIG. 4**

FIG. 5

500

| 505 | 510 | 520 | 530 | 540 |
|---|---|---|---|---|
| BITSTREAM | PARSER | ENTROPY DECODER | INVERSE QUANTIZER | INVERSE TRANSFORMER |

| 595 | 580 | 570 | 550 | |
|---|---|---|---|---|
| RESTORED FRAME | LOOP FILTERING UNIT | DEBLOCKING UNIT | INTRA PREDICTOR | INTRA |

560

MOTION COMPENSATOR    INTER

REFERENCE FRAME

585

EP 2 713 612 A2

# FIG. 6

START

DETERMINE SCALING FACTOR — S610

DETERMINE QP VALUE OF CURRENT BLOCK — S620

ACQUIRE PREDICTED QP VALUE OF CURRENT BLOCK — S630

DETERMINE QP DIFFERENCE VALUE BY USING QP VALUE AND PREDICTED QP VALUE — S640

ADJUST QP DIFFERENCE VALUE BY EXTRACTING SCALING FACTOR FROM QP DIFFERENCE VALUE — S650

GENERATE BITSTREAM INCLUDING SCALING FACTOR AND ADJUSTED QP DIFFERENCE VALUE — S660

TRANSMIT BITSTREAM — S670

END

# FIG. 7

SEQUENCE LAYER — 7100

| SEQUENCE HEADER | GoP | GoP | · · · · · | SEQUENCE HEADER | GoP | GoP | | · · · | | SEQUENCE HEADER |

GoP LAYER — 7200

| GoP HEADER | PICTURE | PICTURE | PICTURE | PICTURE | | · · · | | PICTURE |

PICTURE LAYER — 7300

| PICTURE HEADER | SLICE | SLICE | SLICE | SLICE | | · · · | | SLICE |

SLICE LAYER — 7400

| SLICE HEADER | BLOCK | BLOCK | BLOCK | BLOCK | | · · · | BLOCK |

BLOCK LAYER — 7500

7000 VIDEO SEQUENCE

EP 2 713 612 A2

# FIG. 8

```
          ( START )
              │
              ▼
┌─────────────────────────────────────┐
│ EXTRACT SCALING FACTOR AND ADJUSTED QP │── S810
│ DIFFERENCE VALUE FROM RECEIVED BITSTREAM │
└─────────────────────────────────────┘
              │
              ▼
┌─────────────────────────────────────┐
│    ESTIMATE PREDICTED QP VALUE OF    │── S820
│           CURRENT BLOCK              │
└─────────────────────────────────────┘
              │
              ▼
┌─────────────────────────────────────┐
│  ACQUIRE QP VALUE OF CURRENT BLOCK BY │
│ USING PREDICTED QP VALUE, SCALING FACTOR, │── S830
│    AND ADJUSTED QP DIFFERENCE VALUE  │
└─────────────────────────────────────┘
              │
              ▼
┌─────────────────────────────────────┐
│ PERFORM INVERSE QUANTIZATION ON CURRENT │── S840
│   BLOCK BY USING ACQUIRED QP VALUE   │
└─────────────────────────────────────┘
              │
              ▼
           ( END )
```

EP 2 713 612 A2

# FIG. 9

100

110

111
SCALING FACTOR DETERMINER

112
QP DETERMINER

113
PREDICTED QP ACQUIRER

114
QP DIFFERENCE DETERMINER

120

121
ADJUSTER

130
BITSTREAM GENERATOR

140
TRANSMITTER

## FIG. 10

```
                                      ┌─ 200
  ┌──────────────────────────────────┐
  │                           ┌─ 210  │
  │  ┌────────────────────────────┐   │
  │  │        RECEIVER            │   │
  │  └────────────────────────────┘   │
  │              │            ┌─ 220   │
  │  ┌ ─ ─ ─ ─ ─ │ ─ ─ ─ ─ ─ ─ ─ ─ ┐  │
  │                       ┌─ 221      │
  │  │ ┌────────────────────────┐ │   │
  │    │ DIFFERENCE INFORMATION │      │
  │  │ │      EXTRACTOR         │ │   │
  │    └────────────────────────┘      │
  │  │           │          ┌─ 222 │   │
  │    ┌────────────────────────┐      │
  │  │ │ PREDICTED QP ESTIMATOR │ │   │
  │    └────────────────────────┘      │
  │  └ ─ ─ ─ ─ ─ │ ─ ─ ─ ─ ─ ─ ─ ─ ┘  │
  │              │            ┌─ 230   │
  │  ┌────────────────────────────┐   │
  │  │       QP ACQUIRER          │   │
  │  └────────────────────────────┘   │
  │              │            ┌─ 240   │
  │  ┌ ─ ─ ─ ─ ─ │ ─ ─ ─ ─ ─ ─ ─ ─ ┐  │
  │                       ┌─ 241      │
  │  │ ┌────────────────────────┐ │   │
  │    │    INVERSE QUANTIZER   │      │
  │  │ └────────────────────────┘ │   │
  │  └ ─ ─ ─ ─ ─ ─ ─ ─ ─ ─ ─ ─ ─ ─ ┘  │
  └──────────────────────────────────┘
```